(19) Europäisches Patentamt

European Patent Office

Office européen des brevets

(11) Veröffentlichungsnummer: **0 176 652 B1**

(12) **EUROPÄISCHE PATENTSCHRIFT**

(45) Veröffentlichungstag der Patentschrift: **25.08.93**

(51) Int. Cl.5: **G01S 13/52**

(21) Anmeldenummer: **85101683.2**

(22) Anmeldetag: **15.02.85**

(54) **Schaltungsanordnung zur Unterdrückung von Ueberreichweitenechos bei Pulsdoppler-Radargeräten.**

(30) Priorität: **25.09.84 CH 4585/84**

(43) Veröffentlichungstag der Anmeldung:
**09.04.86 Patentblatt 86/15**

(45) Bekanntmachung des Hinweises auf die
Patenterteilung:
**25.08.93 Patentblatt 93/34**

(84) Benannte Vertragsstaaten:
**CH DE GB IT LI NL**

(56) Entgegenhaltungen:
**EP-A- 0 044 285        CH-A- 511 441**
**DE-A- 2 546 615        FR-A- 2 411 418**
**US-A- 3 418 574        US-A- 3 707 718**
**US-A- 3 828 348**

(73) Patentinhaber: **SIEMENS-ALBIS AKTIENGE-
SELLSCHAFT
PV/Patente und Verträge Postfach
CH-8047 Zürich(CH)**

(72) Erfinder: **Colomb, Serge
Alte Gfennstrasse 39
CH-8600 Dübendorf(CH)**

**Beschreibung**

Die vorliegende Erfindung betrifft eine Schaltungsanordnung zur Unterdrückung von Überreichweitenechos bei empfangskohärenten Pulsdoppler-Radargeräten gemäss dem Oberbegriff des Patentanspruchs 1.

Zur Auswertung des Dopplersignals und zur Unterdrückung unerwünschter Echosignale in Radargeräten wird oft das Dopplersignal über wenigstens drei getrennte, aneinander anschliessende Bandfilterkanäle mit Gleichrichtern und Schwellwertschaltern an eine Logikschaltung geleitet. So ist beispielsweise aus der DE-AS 20 36 175 ein solches Radargerät bekannt, bei dem die Ausgangsspannung eines Doppler-Signal-Verstärkers mittels einer Konstanthalteschaltung auf einen solchen konstanten Wert geregelt wird, dass die in ihm enthaltene Rauschspannung ohne Dopplersignal in jedem Bandfilterkanal nahe unterhalb des Schaltschwellenwertes der betreffenden Schwellenwert-Schaltstufen liegt.

Derartige Radargeräte sind zwar sehr gut geeignet, um den Einfluss von Festzeichenechos weitgehend auszuschalten, erweisen sich jedoch als nachteilig im Hinblick auf die Unterdrückung von Überreichweitenechos, insbesondere wenn sie mit einer konstanten Falschmelderate oder nach sogenannten CFAR-Methoden (Constant false alarm rate) und mit Pulsfrequenz- oder sogenannten PRF-Sprüngen (Pulse-repetition frequency) arbeiten, weil dann die CFAR-Schwellen bei Überreichweitenechos (second time around echoes) oft nicht genug schnell und zuverlässig arbeiten können.

Ferner ist aus US Pat. 3,828,348 eine Schaltung bekannt, die geeignet ist, Überreichweitenechos zu unterdrücken. Beim gleichzeitigen Auftreten eines Ziel- und eines Überreichweitenechos werden jedoch beide Signale unterdrückt. Die Zielinformation geht somit verloren, bis die beiden Echosignale zeitlich wieder getrennt auftreten.

Es ist daher Aufgabe der vorliegenden Erfindung ein Radarsystem anzugeben, das fähig ist, auch Überreichweitenechos zu unterdrücken, und zwar unabhängig von der Möglichkeit, andere unerwünschte Echos, wie Boden- und/oder Regen- und/oder Wasserspiegelechos (Mehrwegechos) zu unterdrücken, und auch unabhängig davon, ob man mit zwei oder mehr Impulsfolgefrequenzen arbeitet. Dabei soll der Verlust von Zielinformationen bei der Unterdrückung von Überreichweitenechos vermieden werden.

Die Lösung dieser Aufgabe wird durch die im kennzeichnenden Teil des Patentanspruchs 1 angegebenen Massnahmen erreicht. Vorteilhafte Ausgestaltungen der Erfindung sind in weiteren Ansprüchen angegeben.

Bei gleichzeitig auftretenden Ziel- und Überreichweitenechos besteht die Möglichkeit, die beiden Signale durch eine Änderung der Pulsrepetitionsfrequenz PRF derart zeitlich voneinander zu trennen, dass alle weiteren Überreichweitenechos unabhängig von den Zielechos unterdrückt werden können. Die Zielinformation bleibt daher erhalten.

Im folgenden wird ein Ausführungsbeispiel der Erfindung anhand von Zeichnungen näher beschrieben. Es zeigt:

Fig. 1 das Blockschaltbild einer Dopplerfilterbank und eines nachgeschalteten Detektors für Ueberreichweitenechos nach der Erfindung,

Fig. 2 ein Blockschaltbild zur Beschreibung eines solchen nachgeschalteten Detektors.

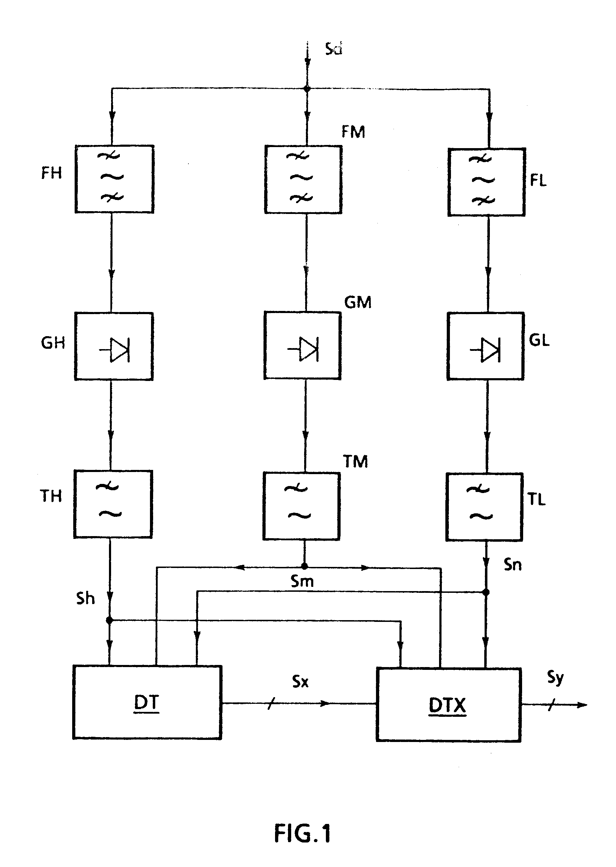

Die Dopplerfilterbank nach Fig. 1 wird mit dem Dopplersignal Sd des Radargerätes beaufschlagt, das über drei parallelgeschaltete Kanäle als Signale Sh, Sm, Sn den Eingängen zweier Detektoren DT und DTX zugeführt wird. Die drei Kanäle weisen je ein Bandpassfilter FH, FM bzw. FL, eine Gleichrichterschaltung GH, GM bzw. GL und ein Tiefpassfilter TH, TM bzw. TL auf, die jeweils in Reihe geschaltet sind, wobei die Frequenzbänder der Bandpassfilter FH, FM und FL unmittelbar aneinander anschliessen und zusammen die Bandbreite des Dopplersignals Sd überdecken. Der Detektor DT kann beispielsweise je einen Schmitt-Trigger pro Kanal und eine Logikschaltung gemäss der deutschen Auslegeschrift Nr. 20 36 175 aufweisen, wobei die Ausgangssignale des Detektors DT über den erfindungsgemässen Detektor DTX für Ueberreichweitenechos geführt werden.

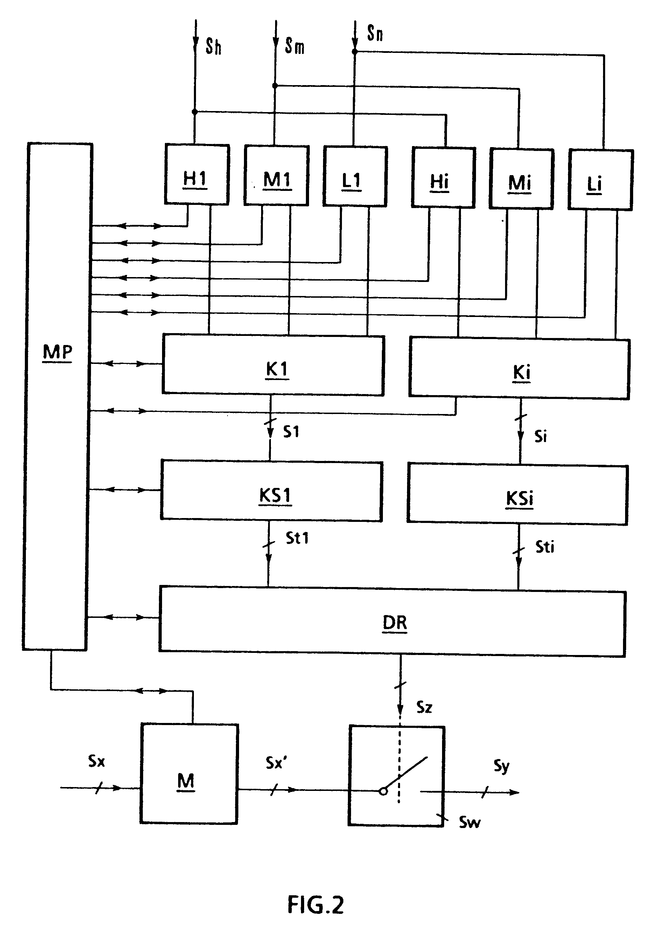

In Fig. 2 ist zur Vereinfachung ein Detektor DTX für ein Radargerät dargestellt, das mit nur q = 2 Impulsfrequenzen arbeitet, für die je ein Komparator K1 bzw. Ki vorgesehen ist. Im Komparator K1 werden die jeweils über einen Speicher H1, M1 bzw. L1 geführten Signale Sh, bzw. Sm bzw. Sn (Fig. 1) verglichen. Der Komparator Ki ist auch an drei weitere Speicher Hi, Mi und Li angeschlossen, die eingangsseitig ebenfalls mit je einem der Signale Sh, Sm und Sn beaufschlagt sind, die von ihm verglichen werden. Die Speicher H1, M1, L1, Hi, Mi und Li sowie die Komparatoren K1 und Ki, zwei Komparatorschaltungen KS1 und KSi sowie ein Treiber DR und ein weiterer Speicher M sind von einem Prozessor oder Computer MP gesteuert, der dafür sorgt, dass beispielsweise das Signal Sh nur in bestimmten, von einander verschiedenen Zeitpunkten über den Speicher H1 oder über den Speicher Hi zu den Komparatoren K1 oder Ki gelangen können. Desgleichen geschieht mit den Signalen Sm und Sn, die über die Speicher M1, und Mi bzw. L1 und Li geführt werden, wobei die gesteuerten Speicher, Komparatoren, Komparatorschaltungen und der Treiber gegebenenfalls auch Quittungssignale an den Prozessor liefern können. Die Komparatorschaltungen KS1 und KSi sind eingangsseitig je mit den Ausgangssignalen S1 bzw. Si der Komparatoren K1 und Ki beaufschlagt.

Gegebenenfalls sind weitere, in der Fig. 2 nicht dargestellte Komparatoren vorhanden, die eine ähnliche Funktion für andere Impulsfolgefrequenzen erfüllen. Die Ausgangssignale St1 und Sti der Komparatorschaltungen KS1 bzw. KSi werden entsprechenden Eingängen des Treibers DR zugeführt, dessen Ausgangssignale Sz zur Steuerung einer Schaltstufe SW beispielsweise mit je einem Schalter pro Entfernungstor dienen. Damit können die über die verschiedenen Schalter der Schaltstufe SW geführten Ausgangssignale Sx' des Speichers M ein- oder ausgeschaltet und als Signale Sy der Auswerteschaltung des Radargerätes weitergeleitet werden. Dabei ist der Speicher M eingangsseitig mit den Ausgangssignalen Sx des Detektors DT beaufschlagt. Das Radargerät nach den Figuren 1 und 2 kann sowohl in analoger als auch in digitaler Technik realisiert werden.

Dieses Radargerät funktioniert folgendermassen:
Die drei Speicher H1, M1, L1 sind für die eine und die drei Speicher Hi, Mi, Li für die andere Impulsfolgefrequenz vorgesehen. Entsprechendes gilt, wenn man mit q Impulsfolgefrequenzen arbeitet. Bei einer Anzahl r Distanzfenster müssen diese Speicher je r Signalwerte speichern und die Komparatoren K1 und Ki je r Vergleiche bezüglich der Signale Sh, Sm und Sn für die Distanzfenster durchführen können. Die Komparatoren K1 und Ki bestimmen jeweils den Absolutwert der Spektralanteile der Signale Sh, Sm und Sn und bilden ihr relatives Verhältnis, woraus erkennbar ist, ob im betreffenden Distanzfenster ein Ueberreichweltenecho vorhanden ist oder nicht. Da bereits vor dem Empfang eines Ueberreichweitenechos der Sender mit Bestimmtheit neu gestartet und daher auch der Kohärenzoszillator mit der neuen Phase getriggert werden musste, weist das Echo ein Rauschspektrum auf. Das Echo hat dann keine Phasenbeziehung mit dem ausgesendeten Impuls mehr, weil die Magnetron-Anschwingphasen nach dem Zufallsgesetz erfolgen. Wenn für ein Distanzfenster der Absolutwert gegenüber dem zu erwartenden Empfänger-Rauschpegel oder dem minimal zu detektierenden Zielpegel erhöht ist, und wenn alle Spektralanteile die gleiche Grösse innerhalb einem Toleranzband aufweisen, so wird dies als Zeichen dafür bewertet, dass ein Ueberreichweitenecho vorhanden ist. In diesem Fall wird das Signal St1 bzw. Sti aktiviert, wodurch die Schaltstufe SW sofort über den Treiber DR eine Unterbrechung des Leitungsweges für das betreffende Distanzfenster und die betreffende Impulsfolgefrequenz bewirkt.

Dabei erfolgt dies getrennt für jede Impulsfolgefrequenz. Da die Ueberreichweitenechos bei PRF-Aenderungen nicht immer an derselben zeitlichen Lage erscheinen, ist es somit möglich, ein echtes Ziel in der anderen bzw. in einer der anderen PRF-Perioden normal zu detektieren, für die dann keine Unterbrechung in der Schaltstufe SW erfolgt.

In der Komparatorschaltung KS1 wird der Zustand des Signales S1(to), der im Zeitpunkt to einer Störung in einem bestimmten Distanzfenster entspricht, mit dem Zustand des Signals S1(t1) im Zeitpunkt t1 verglichen, der dem nächsten Impuls derselben Impulsfolgefrequenz und desselben Distanzfensters entspricht. Ist S1(t1) = S1(to), so wird die Aktivierung des Signals St1 unterdrückt. Entsprechendes gilt für die anderen Impulsfolgefrequenzen, wenn beispielsweise Si(ti') = Si(to') ist, worin ti' der Zeitpunkt des nächsten Impulses nach demjenigen ist, der im Zeitpunkt to' vorhanden war. Diese Aufhebung der Unterdrückung wird allerdings nur bei einigen wenigen nacheinanderfolgenden Impulsen, z.B. 2 bis 7, durchgeführt. Nachher kommt die Schaltung auf die ursprüngliche Lage zurück. Diese Massnahmen werden deshalb ergriffen, weil nach einer PRF-Periode die Schwellen des Detektors DT (Fig. 1) schon gut eingelaufen sind, so dass dann eine Unterdrückung in der Schaltstufe SW entfallen kann. Dies ermöglicht, auch bei einem mit einer Störung behafteten Distanzfenster eine Detektion durchzuführen, jedoch erst bei der nächsten Periode und dies nur falls das Zielecho aus der Störung heraus detektierbar ist.

Die Speicher Hi, Mi und Li sowie der Komparator Ki können entfallen, wenn die Speicher H1, M1 und L1 sowie der Komparator K1 deren Funktionen in einem Zeitmultiplexbetrieb übernehmen, was durch den Einsatz des Prozessors MP ohne weiteres möglich ist und zwar auch dann, wenn man mit mehr als zwei Pulsfrequenzen arbeitet. Speziell bei Anwendungen in Digitaltechnik kann dies mit relativ wenig Aufwand realisiert werden. Unabhängig davon kann je eine Dopplerfilterbank und/oder je ein ihr vorgeschaltetes Dopplerfilter auch für jede Pulsfrequenz separat ausgeführt werden, was gegebenenfalls von Vorteil sein kann, um zu vermeiden, dass die Signale der einzelnen PRF-Impulse durch ihre Laufzeit in den Dopplerfiltern sich gegenseitig beeinflussen. Auf jeden Fall kann auch für jede Pulsfrequenz und jeden Kanal je ein separates, dem Tiefpassfilter (z.B. TH) parallelgeschaltetes weiteres Tiefpassfilter eingefügt werden, das bei Störungen genügend rasch arbeitet, wodurch beim Vorhandensein von Ueberreichweitenechos ein schnelles Einlaufen des Radargerätes möglich ist, ohne jedoch die Empfindlichkeit der Detektion der nicht aktivierten Pulsfrequenz-Bereichen zu beeinträchtigen. Die Tiefpassfilter können ungleiche Zeitkonstanten für die Anstiegs- bzw. Abfallzeiten aufweisen, wodurch die Schwellen der Detektoren bei einer Störung rasch einlaufen und dann infolge der längeren Abfallzeit für längere Zeit relativ hoch bleiben, so dass damit ein Schutz gegen die mit ähnlicher Störleistung eintreffenden Ueberreichweitenechos gewährleistet wird.

Wenn die Schalterstufe SW eine Anzahl N = q •r Schalter aufweist, kann der Treiber DR entfallen. Falls sie mit n < q•r Schalter arbeitet, muss der Treiber DR eine entsprechende Multiplexierfunktion ausüben.

## Patentansprüche

1. Schaltungsanordnung zur Unterdrückung von Überreichweitenechos bei Pulsdoppler-Radargeräten mit einer Bandfilterbank, die mindestens drei separate Bandfilterkanäle aufweist, deren Frequenzbänder aneinander anschliessen, wobei eine Auswertung der Absolutwerte der Spektralanteile dieser Frequenzbänder stattfindet, **dadurch gekennzeichnet, dass,** wenn alle Spektralanteile zumindest angenähert gleich gross sind und über einem vorbestimmten Schwellenwert liegen, Aktivierungssignale (Sz) erzeugt werden, durch welche eine Detektion des diesen Spektralanteilen entsprechenden Entfernungstorsignals (Sx') unterdrückbar ist, indem einem an die Bandfilterkanäle angeschlossenen Detektor (DT) ein Überreichweitendetektor (DTX) nachgeschaltet ist, der ebenfalls eingangsseitig mit den Bandfilterkanalsignalen (Sh, Sm, Sn) beaufschlagt ist, die über einen Speicher (H1, M1, L1) zu einem Komparator (K1) geführt werden, der die Auswertung der Spektralanteile bezüglich des vorbestimmten Schwellenwertes durchführt, indem die Ausgangssignale des Komparators (K1) eine Schaltstufe (SW) steuern, durch die der Leitungsweg der Ausgangssignale (Sx) des Detektors (DT) unterbrechbar ist und dass mindestens zwei verschiedenen Pulsfrequenzen wählbar sind, von denen eine jeweils derart gewählt wird, dass sich Ziel- und Überreichweitenechos nicht derart überdecken, dass Zielechos zusammen mit zu beseitigenden Überreichweitenechos ausgelöscht werden.

2. Schaltungsanordnung nach Anspruch 1, **dadurch gekennzeichnet**, dass für jede von i Pulsfrequenzen ein Speicher (Hi, Mi, Li) und ein Komparator (Ki) vorgesehen sind.

3. Schaltungsanordnung nach Anspruch 1 oder 2, **dadurch gekennzeichnet**, dass separate Tiefpassfilter (TH, TM, TL) und/oder Filterbänke für verschiedene Pulsfrequenzen vorgesehen sind.

4. Schaltungsanordnung nach Anspruch 1, **dadurch gekennzeichnet**, dass der Speicher (H1, M1, L1) und der Komparator (K1) im Multiplexbetrieb zur Verarbeitung von i Pulsfrequenzen betreibbar sind.

5. Schaltungsanordnung nach Anspruch 1 oder 4, **dadurch gekennzeichnet**, dass die Tiefpässe (TH, TM, TL) und/oder mindestens eine Filterbank im Multiplexbetrieb für i Pulsfrequenzen betreibbar sind.

6. Schaltungsanordnung nach Anspruch 5, **dadurch gekennzeichnet**, dass die Tiefpassfilter (TH, TM, TL) unsymmetrische Anstiegs- und Abfallzeiten aufweisen.

7. Schaltungsanordnung nach einem der vorhergehenden Ansprüche, **dadurch gekennzeichnet**, dass dem Komparator (K1, Ki) ein Komparator (KS1, KSi) nachgeschaltet ist, der zwei aufeinanderfolgende und innerhalb desselben Distanzfensters auftretende Signale (Si(to), Si(t1)) mit einander vergleicht und das Aktivierungssignal (Sz) während einigen wenigen aufeinanderfolgenden Impulse unterdrückt, falls nach dem ersten Signal (Si(to)) auch das folgende Signal (Si(t1)) eine Störung anzeigt.

## Claims

1. A circuit arrangement for suppressing second-time-around echoes in pulsed Doppler radar apparatus with a band filter bank having at least three separate band filter channels, the frequency bands of which follow each other, wherein an evaluation of the absolute values of the spectral portions of these frequency bands takes place, characterised in that if all spectral portions are of at least approximately the same magnitude and lie over a predetermined threshold value, activation signals (Sz) are produced by which detection of the unwanted distance signal (Sx') corresponding to these spectral portions is able to be suppressed, in that a detector (DT) connected to the band filter channels has connected after it a second-time-around detector (DTX), which detector (DTX) also acts on the input side with the band filter channel signals (Sh, Sm, Sn) which are guided by way of a memory (H1, M1, L1) to a comparator (K1), which comparator carries out the evaluation of the spectral portions relative to the predetermined threshold value, in that the output signals of the comparator (K1) control a switch stage (SW) through which the supply line path of the output signals (Sx) of the detector (DT) is able to be interrupted, and in that at least two different pulse frequencies are able to be selected, one of which is selected so that the target and second-time-around echoes do not overlap, so that target echoes are not deleted together with the second-time-around echoes to be removed.

2. A circuit arrangement according to claim 1, characterised in that a memory (Hi, Mi, Li) and a comparator (Ki) are provided for each of the i pulse frequencies.

3. A circuit arrangement according to claim 1 or 2, characterised in that separate low-pass filters (TH, TM, TL) and/or filter banks are provided for various pulse frequencies.

4. A circuit arrangement according to claim 1, characterised in that the memory (H1, M1, L1) and the comparator (K1) are able to be operated in multiplex operation for processing i pulse frequencies.

5. A circuit arrangement according to claim 1 or 4, characterised in that the low pass filters (TH, TM, TL) and/or at least one filter bank are able to be operated in multiplex operation for i pulse frequencies.

6. A circuit arrangement according to claim 5, characterised in that the low-pass filters (TH, TM, TL) have asymmetric rise and fall times.

7. A circuit arrangement according to one of the preceding claims, characterised in that a comparator (KS1, KSi), connected after the comparator (K1, Ki), compares successive signals (Si(to), Si(t1)) occurring within the same distance window with each other, and suppresses the activation signal (Sz) during a few successive pulses if, after the first signal (Si(to)), the following signal (Si(t1)) also indicates a disturbance.

**Revendications**

1. Montage pour supprimer des signaux seconds dans des appareils radar Doppler à impulsions comportant un bloc de filtres passe-bande, qui comporte au moins trois canaux indépendants de filtres passe-bande, dont les bandes de fréquence sont contiguës, avec évaluation des valeurs absolues des composantes spectrales de ces bandes de fréquences, caractérisé en ce que, lorsque toutes les composantes spectrales sont au moins approximativement égales et dépassent une valeur de seuil prédéterminée, des signaux d'activation (Sz) sont produits, grâce auxquels une détection du signal de porte de distance (Sx') correspondant à ces composantes spectrales, peut être supprimée par le fait qu'en aval d'un détecteur (DT) relié aux canaux de filtres passe-bande est branché un détecteur de signaux seconds (DTX), qui est également alimenté, côté entrée, par les signaux (Sh, Sm, Sn) des canaux de filtre passe-bande, qui sont envoyés par l'intermédiaire d'une mémoire (H1, M1, L1), à un comparateur (K1), qui évalue les composantes spectrales en fonction de la valeur de seuil prédéterminée, les signaux de sortie du comparateur (K1) commandant un étage de commutation (SW), au moyen duquel la voie de transmission des signaux de sortie (Sx) du détecteur (DT) peut être interrompue, et en ce que l'on peut sélectionner au moins deux fréquences différentes d'impulsions, dont l'une est choisie pour que des échos de cibles et des signaux seconds ne se recouvrent pas en sorte que des échos de cibles seraient effacés conjointement avec des signaux seconds devant être éliminés.

2. Montage suivant la revendication 1, caractérisé par le fait que pour chacune des i fréquences d'impulsions, il est prévu une mémoire (Hi, Mi, Li) et un comparateur (Ki).

3. Montage suivant la revendication 1 ou 2, caractérisé par le fait qu'il est prévu, pour différentes fréquences d'impulsions, des filtres passe-bas (TH, TM, TL) et/ou des blocs de filtres, séparés.

4. Montage suivant la revendication 1, caractérisé par le fait que la mémoire (H1, M1, L1) et le comparateur (K1) peuvent fonctionner en multiplex pour le traitement de i fréquences d'impulsions.

5. Montage suivant la revendication 1 ou 4, caractérisé par le fait que les filtres passe-bas (TH, TM, TL) et/ou au moins un bloc de filtres peuvent fonctionner en multiplex pour i fréquences d'impulsions.

6. Montage suivant la revendication 5, caractérisé par le fait que les filtres passe-bas (TH, TM, TL) possèdent des temps de montée et des temps de descente dissymétriques.

7. Montage suivant l'une des revendications précédentes, caractérisé par le fait qu'en aval du comparateur (K1, Ki) est branché un comparateur (KS1, KSi), qui compare, entre eux, deux signaux $(S_i(t_o), S_i(t_1))$ se succèdant et apparaissant dans la même fenêtre de distance, et qui supprime le signal d'activation $(S_Z)$ pendant un petit nombre d'impulsions successives, dans le cas où, après le premier signal $(S_i(t_o))$, le signal suivant $(S_i(t_1))$ indique également une perturbation.

FIG.1

FIG.2